(19) Europäisches Patentamt
European Patent Office
Office européen des brevets

(11) **EP 3 053 719 B1**

(12) **EUROPÄISCHE PATENTSCHRIFT**

(45) Veröffentlichungstag und Bekanntmachung des Hinweises auf die Patenterteilung:
**08.11.2017 Patentblatt 2017/45**

(51) Int Cl.:
*B27G 13/00* *(2006.01)*  *B27G 13/10* *(2006.01)*
*B23C 5/08* *(2006.01)*  *B23C 5/20* *(2006.01)*
*B23C 5/00* *(2006.01)*

(21) Anmeldenummer: **16153836.8**

(22) Anmeldetag: **02.02.2016**

(54) **FRÄSWERKZEUG FÜR WINKELSCHLEIFER UND VERWENDUNG DIESES FRÄSWERKZEUGES**

MILLING TOOL FOR ANGLE GRINDER AND USE OF SUCH A TOOL

OUTIL DE FRAISAGE POUR MEULEUSE D'ANGLE ET UTILISATION DE CET OUTIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.02.2015 PCT/EP2015/052144**

(43) Veröffentlichungstag der Anmeldung:
**10.08.2016 Patentblatt 2016/32**

(73) Patentinhaber: **August Rüggeberg GmbH & Co. KG**
**51709 Marienheide (DE)**

(72) Erfinder: **Huth, Nicolas**
**51789 Lindlar (DE)**

(74) Vertreter: **Rau, Schneck & Hübner**
**Patentanwälte Rechtsanwälte PartGmbB**
**Königstraße 2**
**90402 Nürnberg (DE)**

(56) Entgegenhaltungen:
**EP-A1- 1 698 417    FR-A- 953 994**
**FR-A- 1 532 867    FR-A1- 2 918 909**
**US-A- 5 605 420**

**Beschreibung**

Die vorliegende Patentanmeldung nimmt die Priorität der internationalen Patentanmeldung PCT/EP 2015/052 144 in Anspruch, deren Inhalt durch Bezugnahme hierin aufgenommen wird.

Die Erfindung betrifft ein Fräswerkzeug nach dem Oberbegriff des Anspruches 1.

Ein derartiges aus der EP 1 698 417 A1 bekanntes Fräswerkzeug weist einen schweren, massiven Tragkörper aus Kunststoff auf, der faserverstärkt ist. Für einen Einsatz an Winkelschleifern ist ein derartiges Fräswerkzeug ungeeignet, da es zum einen sehr schwer ist und zum anderen nicht die für den Einsatz an freihandgeführten Winkelschleifern erforderliche Bruchfestigkeit aufweisen kann.

Ein ähnliches Fräswerkzeug ist aus der US 5,605,420 A bekannt, das nur für stationären Einsatz geeignet ist.

Aus der EP 0 292 246 B1 (entsprechend DE 38 54 408 T2) und der FR 1 532 867 A sind Fräswerkzeuge bekannt, die einstückig aus Stahl ausgebildet sind und radial über ihren Außen-Umfang und in Richtung ihrer Längsachse vorstehende Schneidzähne aufweisen. Diese Werkzeuge sind zum stationären Einsatz vorgesehen und auch nur hierfür geeignet.

Aus der US 2014/0010606 A1 ist ein Fräswerkzeug bekannt, das einen scheibenförmigen Tragkörper mit am Außenumfang radial vorstehenden und auswechselbaren Schneidelementen aufweist. Dieses Fräswerkzeug ist zum Schneiden von Schlitzen in Werkstücken vorgesehen.

Der Erfindung liegt die Aufgabe zugrunde, ein Fräswerkzeug so auszugestalten, dass es für freihandgeführte Winkelschleifer einsetzbar ist.

Diese Aufgabe wird erfindungsgemäß durch die Merkmale im Kennzeichnungsteil des Anspruches 1 gelöst.

Durch die erfindungsgemäßen Maßnahmen wird erreicht, dass das Fräswerkzeug ein geringes Gewicht hat, das dem einer herkömmlichen Schleifscheibe für dieselbe Anwendung in einem Winkelschleifer entspricht. Aus derartigen in einer Anzahl von 10 bis 80 mit Epoxydharz beschichteten Glasfasergewebe-Lagen aufgebaute Tragkörper weisen eine sehr hohe Sprengkraft auf, sodass damit die bei einem Einsatz an freihandgeführten Winkelschleifern geforderte Sicherheit gegeben ist.

Weiterhin ist es von Vorteil, wenn der Tragkörper gemäß Anspruch 2 aus einer Anzahl m von mit Epoxydharz beschichteten Glasfasergewebe-Lagen besteht, wobei für die Zahl m der Lagen gilt: $30 < = m < = 80$. Es kann auch von Vorteil sein, wenn die Anzahl der Glasfasergewebe-Lagen im Bereich von 30 bis 60 liegt. Der Harzanteil beträgt in jedem Fall vorteilhafterweise 30% bis 55% vom Gesamtgewicht der beschichteten Glasfasergewebe-Lagen. Das Gewicht der Glasfasergewebe-Lagen liegt im Bereich von 150 gr/m$^2$ bis 250 gr/m$^2$.

Durch die Weiterbildung durch Anspruch 4 wird erreicht, dass die Schneidelemente nach einem Teilverschleiß der Schneiden durch Drehen wieder einsetzbar gemacht werden. Außerdem können sie abgenommen und nachgeschliffen oder durch andersartige Schneidelemente ersetzt werden.

Das Verdrehen der Schneidelemente und ihr Austausch ist besonders einfach, wenn gemäß einer weiteren vorteilhaften Ausgestaltung der Erfindung die Schneidelemente jeweils mittels einer Befestigungs-Schraube zentriert am Tragkörper befestigt sind. Eine lösbare Verbindung kann aber auch über einen Bolzen oder über einen Stift erreicht werden, wobei gleichzeitig die Zentrierwirkung erhalten bleibt.

Eine besonders einfache Befestigung der Schneidelemente am Tragkörper ist gegeben, wenn von jeder Schneidelemente-Kammer ausgehend im Tragkörper eine Bohrung ausgebildet ist, in der eine Befestigungs-Hülse angeordnet ist, in die eine ein Schneidelement haltende Befestigungs-Schraube eingeschraubt ist. Hierbei ist es von Vorteil, wenn die Befestigungs-Hülse ein in den Tragkörper eingreifendes Außen-Gewinde und ein die Befestigungsschraube aufnehmendes Innen-Gewinde aufweist, wobei diese Gewinde gegenläufig sein können, wodurch eine besonders feste Verspannung der Schneidelemente im Tragkörper erreicht werden kann.

In besonders einfacher Weise sind die Schneidelemente ringförmig mit einer zu einer Mittel-Achse koaxialen Befestigungs-Öffnung und einer kegelstumpfförmigen, eine Freifläche bildenden Mantelfläche und einer eine Spanfläche bildenden Frontseite ausgebildet. Hierbei ist es von Vorteil, wenn zwischen der Freifläche des Schneidelements und einer zu dessen Mittel-Achse parallelen Linie ein Freiwinkel $\gamma$ gebildet ist, für den gilt: $0° < = \gamma < = 20°$ und vorzugsweise $5° < = \gamma < = 15°$. Bei diesem Freiwinkel $\gamma$ handelt es sich um den Freiwinkel des Scheidelements. Der beim Einsatz des Fräswerkzeugs wirksame Freiwinkel hängt dagegen von der Anordnung des Schneidelementes am Tragkörper ab.

Weiterhin ist es von Vorteil, wenn die Schneidelemente jeweils unter einem negativen Spanwinkel $\beta$ in einer Schneidelemente-Kammer angeordnet sind, wobei für den Spanwinkel $\beta$ gilt: $0° < = \beta < = 40°$ und vorzugsweise $\beta = 30°$. Diese Ausgestaltung führt dazu, dass ein relativ weicher Schnitt erreicht wird.

Wenn gemäß einer weiteren vorteilhaften Ausgestaltung der Erfindung die Schneidelemente jeweils unter einem Drallwinkel $\alpha$ in einer Schneidelemente-Kammer angeordnet sind, wird erreicht, dass die Späne derart abgeschleudert werden, dass eine Verletzung des Werkers ausgeschlossen wird. Für den Drallwinkel gilt hierbei: $10° < = \alpha < = 40°$ und vorzugsweise $\alpha = 30°$.

Da die erfindungsgemäßen Fräswerkzeuge an Winkelschleifern jeweils unter einem Winkel zum Werkstück eingesetzt werden, ist es von Vorteil, wenn der Tragkörper zwischen der Unterseite und der Oberseite eine Außen-Umfangsfläche aufweist und wenn die Schneidelemente über diese Außen-Umfangsfläche radial nach außen vorragen.

Es ist von Vorteil, wenn die Schneidelemente aus einem Schneid-Werkstoff bestehen, wofür insbesondere Hartmetall mit Korngrößen von 0,2 μm bis 10 μm, Keramik, Hartmetall mit einer Beschichtung, z.B. Diamantbeschichtung, polykristallines Bornitrid (PCBN), polykristalliner Diamant (PKD), oder High Speed Steel (HSS) geeignet sind.

Weiterhin ist es von Vorteil, wenn die Schneidelemente in einer Anzahl n am Tragkörper angeordnet sind, wobei für n gilt: 2 < = n < = 20 und vorzugsweise 5 < = n < = 10. Die Zahl n kann so gewählt werden, dass die Vibration des Fräswerkzeugs beim Einsatz minimiert wird, was den Einsatz für den Werker erheblich erleichtert. Die Schneidelemente können in gleichen Winkelabständen am Tragkörper angeordnet sein. Zur Reduktion von Vibrationen kann es aber auch von Vorteil sein, wenn ungleiche Winkelabstände gewählt werden.

Wenn zwischen der Spanfläche des Schneidelementes und einer zu dessen Mittel-Achse senkrechten Linien ein Neigewinkel δ gebildet ist, für den gilt: 0° <= δ <= 90° und vorzugsweise 0° <= δ <= 30°, dann kann damit der effektive negative Spanwinkel optimiert werden, der durch die Drallwinkel α, den Spanwinkel β und den Neigewinkel δ bestimmt wird.

Weiterhin ist die Verwendung eines Fräswerkzeugs nach der Erfindung an freihandgeführten Winkelschleifern als Stirnfräser zum Bearbeiten von Werkstücken aus Metall, faserverstärktem Kunststoff und weichen Naturmaterialien, vorzugsweise Holz, Teil der Erfindung.

Weitere Vorteile, Einzelheiten und Merkmale der Erfindung ergeben sich aus der nachfolgenden Beschreibung eines Ausführungsbeispiels anhand der Zeichnung. Es zeigt:

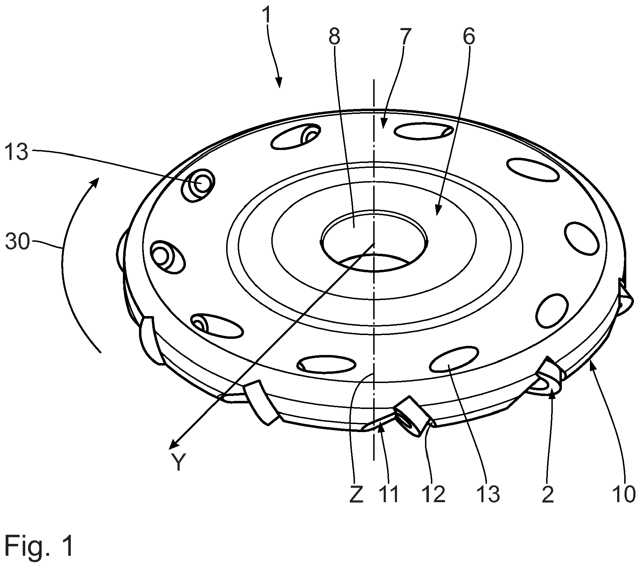

Fig. 1     eine perspektivische Sicht auf die Oberseite eines Fräswerkzeugs,

Fig. 2     eine perspektivische Sicht auf die Unterseite des Fräswerkzeugs nach Fig. 1,

Fig. 3     eine Draufsicht auf die Unterseite des Fräswerkzeugs nach den Fig. 1 und 2,

Fig. 4     eine Seitenansicht des Fräswerkzeugs nach den Fig. 1 bis 3 entsprechend dem Sichtpfeil IV in Fig. 3 in teilweise aufgebrochener Darstellung,

Fig. 5     einen Teilschnitt durch das Fräswerkzeug entsprechend der Schnittlinie V-V in Fig. 4 in gegenüber Fig. 4 vergrößerter Darstellung,

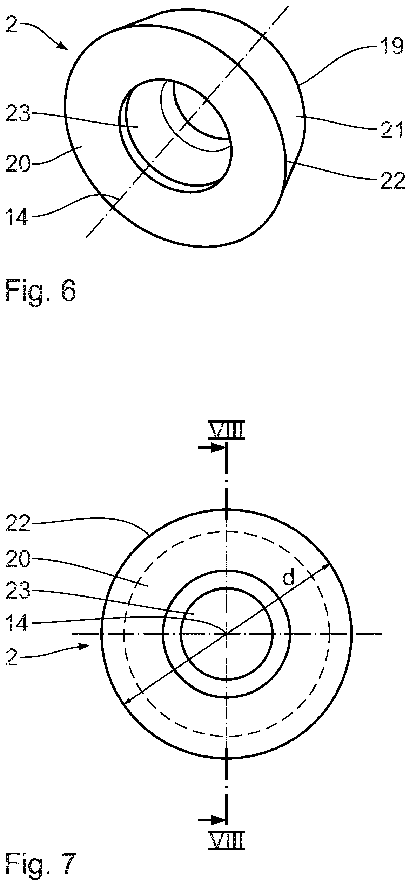

Fig. 6     eine perspektivische Ansicht eines Schneidelementes des Fräswerkzeuges,

Fig. 7     eine Draufsicht auf das Schneidelement nach Fig. 6,

Fig. 8     einen Querschnitt durch das Schneidelement entsprechend der Schnittlinie VIII-VIII in Fig. 7,

Fig. 9     eine Draufsicht auf ein Glasfasergewebe,

Fig. 10    einen Winkelschleifer mit einem Fräswerkzeug nach den Fig. 1 bis 4 und

Fig. 11    einen der Darstellung in Fig. 8 entsprechenden Querschnitt durch ein Schneidelement in abgewandelter Ausführung.

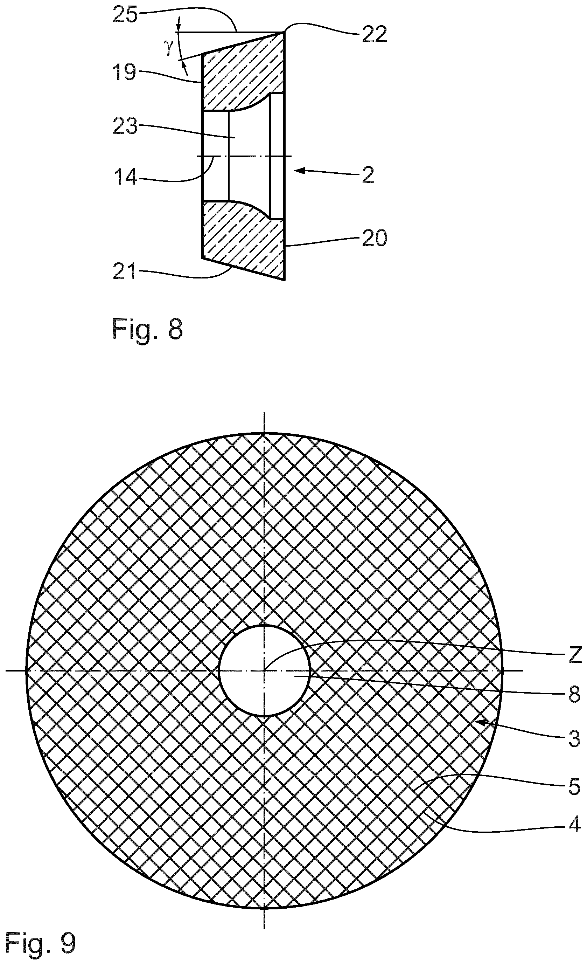

Das in der Zeichnung dargestellte Fräswerkzeug für Winkelschleifer weist einen scheibenförmigen Tragkörper 1 und eine Anzahl n von an diesem befestigten untereinander gleichen Schneidelementen 2 auf. Der Tragkörper 1 ist nicht monolithisch aufgebaut, sondern besteht aus einer Anzahl m von epoxydharzbeschichteten Glasfasergewebe-Lagen 3, sogenannten Prepregs. Diese gemäß Fig. 9 aus Kettfäden 4 und Schussfäden 5 gebildeten Glasfasergewebe-Lagen 3 werden jeweils um eine Drehachse Z gegeneinander verdreht übereinander geschichtet und unter Druck und entsprechender Temperatur in einer Form miteinander verbunden. Dadurch, dass die einzelnen Glasfasergewebe-Lagen 3 gegeneinander gedreht sind, erhält der Tragkörper eine hohe, in alle Richtungen etwa gleiche Festigkeit, so dass ein Spontanbruch des Tragkörpers 1 während des Betriebes, also bei hohen Drehzahlen, ausgeschlossen ist.

Der Tragkörper 1 ist gekröpft ausgebildet, also in seinem mittleren Bereich mit einem zur Drehachse Z drehsymmetrischen Bereich mit einer Kröpfung 6 versehen, die von der Oberseite 7 des Tragkörpers 1 vorsteht. In der Kröpfung 6 ist ebenfalls koaxial mit der Drehachse Z eine Öffnung 8 ausgebildet, die eine Spindel eines Winkelschleifers aufnimmt, worauf weiter unten noch kurz eingegangen wird.

In der der Oberseite 7 gegenüberliegenden Unterseite 9, und zwar im Bereich der Außen-Umfangsfläche 10 des scheibenförmigen Tragkörpers 1, sind Schneidelemente-Kammern 11 durch Fräsen ausgebildet, die zur Unterseite 9 und zur Außen-Umfangsfläche 10 hin offen sind. Die Schneidelemente-Kammern 11 weisen eine Anlage-Fläche 12 für die Schneidelemente 2 auf. Die Anlage-Fläche 12 wird von einer bis zur Oberseite 7 führenden Bohrung 13 durchsetzt, zu deren Mittel-Achse 14 die Anlage-Fläche 12 senkrecht angeordnet ist. In der Bohrung 13 ist eine mit einem Außen-Gewinde 15 und einem Innen-Gewinde 16 versehene Befestigungs-Hülse 17 angeordnet, die in die Bohrung 13 des Tragkörpers 1 eingeschraubt ist. Außen-Gewinde 15 und Innen-Gewinde 16 können gleichläufig oder gegenläufig ausgebildet sein. An der Befestigungs-Hülse 17 ist ein Schneidelement 2 mittels einer Befestigungs-Schraube 18 zentriert befestigt. Die Mittel-Achse 14 ist auch die Mittel-Achse der Befestigungs-Schraube 18 und des Schneidelements 2. Das kegelstumpfförmig ausgebildete Schneidelement 2 liegt mit seiner Rückseite 19 gegen die Anlage-Fläche 12 flächig an, wodurch die Position des Schneidelementes 2 relativ zum Tragkörpers 1 genau festgelegt ist.

Die der Rückseite 19 gegenüberliegende Vorderseite jedes Schneidelementes 2 bildet dessen Spanfläche 20. Die kegelstumpfförmige Außenumfangsfläche des jeweiligen Schneidelementes 2 bildet dessen Freifläche 21. Die zwischen Spanfläche 20 und Freifläche 21 gebildete Kante bildet die Schneide 22 des jeweiligen Schneidelementes 2. Das Schneidelement 2 weist im Bereich der Schneide 22 seinen größten Durchmesser d auf.

Nach Lockern der die zur Mittel-Achse 14 koaxiale Befestigungs-Öffnung 23 durchsetzenden Befestigungs-Schraube 18 kann das jeweilige Schneidelement 2 um die Mittel-Achse 14 gedreht werden, so dass unterschiedliche Bereiche der Schneide 22 bis zum vollständigen Verschleiß zum Eingriff kommen können. Ein Auswechseln der Schneidelemente 2 ist ebenfalls in einfacher Weise möglich.

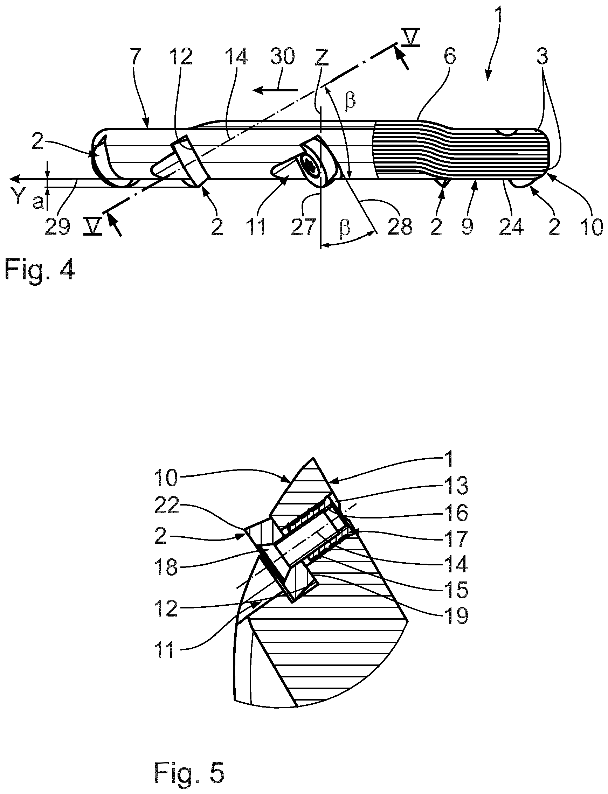

Wie insbesondere Fig. 4 und 5 entnehmbar ist, steht die Rückseite 19 jedes Schneidelementes 2 nicht über die Außen-Umfangsfläche 10 des Tragkörpers 1 vor, sondern liegt etwa bündig hiermit. Demgegenüber ragt jedes Schneidelement 2 mit jeweils einem Bereich seiner Schneide 22, seiner Freifläche 21 und seiner Spanfläche 20 über die Außen-Umfangsfläche 10 und die Unterseite 9 vor, wobei der den Schneidelementen 2 radial zur Drehachse Z hin benachbarte ringförmige Bereich der Unterseite 9 als Tiefen-Begrenzungs-Fläche 24 dient. Über diese Tiefen-Begrenzungs-Fläche 24 steht die jeweilige Schneide 22 maximal um eine Schneidtiefe a vor, durch die die maximale Dicke eines zu schneidenden Spans bestimmt wird.

Der Freiwinkel $\gamma$ des Schneidelementes 2 wird gebildet zwischen der Freifläche 21 und einer zur Mittel-Achse 14 parallelen Linie 25 (Fig. 8).

Ein Spanwinkel $\beta$ ist zwischen einer zur Drehachse Z parallelen Linie 27 und einer Radial-Linie 28 zur Mittel-Achse 14 des jeweiligen Schneidelementes 2 gebildet. Der Spanwinkel $\beta$ ist entsprechend auch durch eine senkrecht zur Drehachse Z verlaufende Y-Achse 29 und die Mittel-Achse 14 definiert. Beide Darstellungen sind aus Fig. 4 ersichtlich. Wie Figur 4 ebenfalls entnehmbar ist, ist der Spanwinkel $\beta$ negativ.

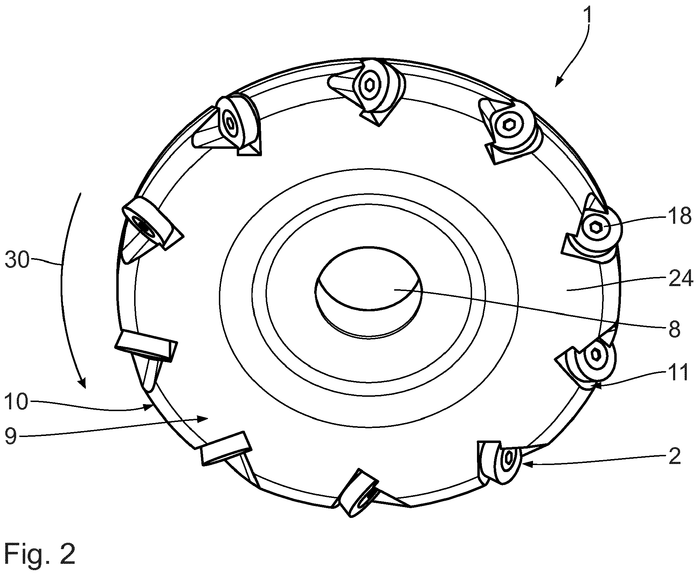

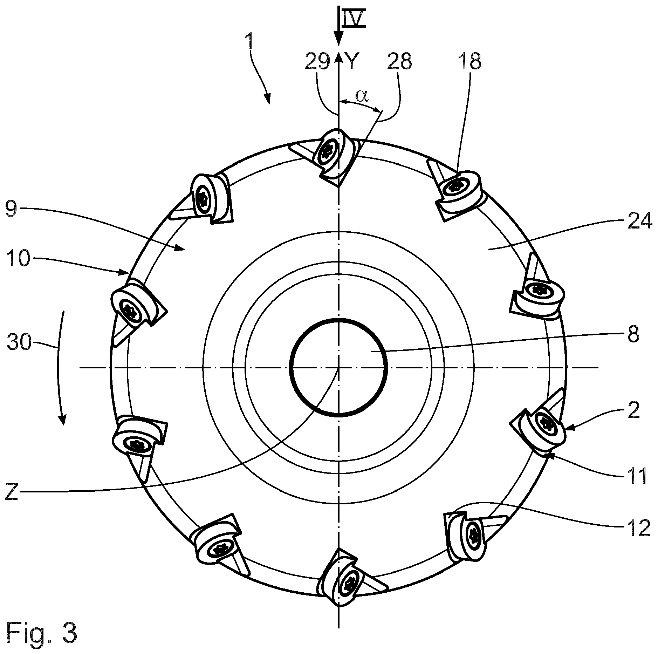

Schließlich ist das Schneidelement 2 auch noch unter einem Drallwinkel $\alpha$ (Fig. 3) relativ zum Tragkörper 1 angeordnet. Dieser Drallwinkel $\alpha$ wird gebildet zwischen einer zur Drehachse z senkrechten Y-Achse 29 und einer zur Mittel-Achse 14 senkrechten Radial-Linie 28. Wie Fig. 2, 3 und 4 entnehmbar ist, wird durch die Anordnung des jeweiligen Schneidelementes 2 unter einem Drallwinkel $\alpha$ bewirkt, dass geschnittene Späne bei Antrieb des Fräswerkzeugs in Rotationsrichtung 30 radial zur Drehachse Z nach außen, also aus dem Bereich des Tragkörpers 1 heraus, geschleudert werden.

Der Spanwinkel $\beta$ und der Drallwinkel $\alpha$ ergeben sich aus der Anordnung des Schneidelementes 2 am Tragkörper.

Für die vorstehend abgehandelten Daten gelten jeweils folgende Bereiche:

50 mm < = D < = 230 mm, vorzugsweise D = 100 mm oder 115 mm oder 125 mm

6 mm < = d < = 20 mm

0° < = $\beta$ < = 40°, vorzugsweise $\beta$ = 30° (Der Spanwinkel $\beta$ ist negativ).

10° < = $\alpha$ < = 40°, vorzugsweise $\alpha$ = 30°

0° < = $\gamma$ < = 20°, vorzugsweise 5° <= $\gamma$ < = 15°

2 < = n < = 20, vorzugsweise 5 <= n < = 12

30 < = m < = 80, vorzugsweise m = 60

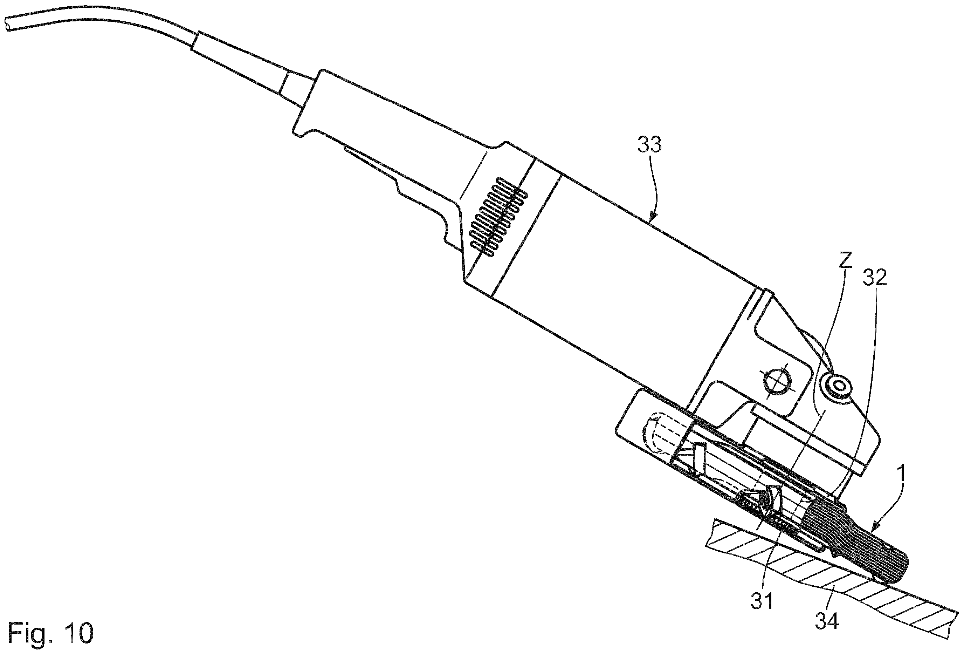

Der Einsatz des Fräswerkzeugs an einem Winkelschleifer ist in Fig. 10 dargestellt. Hiernach ist ein Fräswerkzeug um die Drehachse Z drehantreibbar mittels einer Befestigungs-Mutter 31 an der drehantreibbaren Spindel 32 eines Winkelschleifers 33, eines sogenannten Power-Tools, angebracht und wird unter einem leichten Winkel zur Bearbeitung eines Werkstücks 34 eingesetzt. Hierbei kommt der über die Unterseite 9 des Tragkörpers 1 vorstehende Teil und der über die Außen-Umfangsfläche 10 vorstehende Teil der jeweiligen Schneide 22 zum Einsatz. Die hauptsächliche Funktion ist die eines Stirnfräsers.

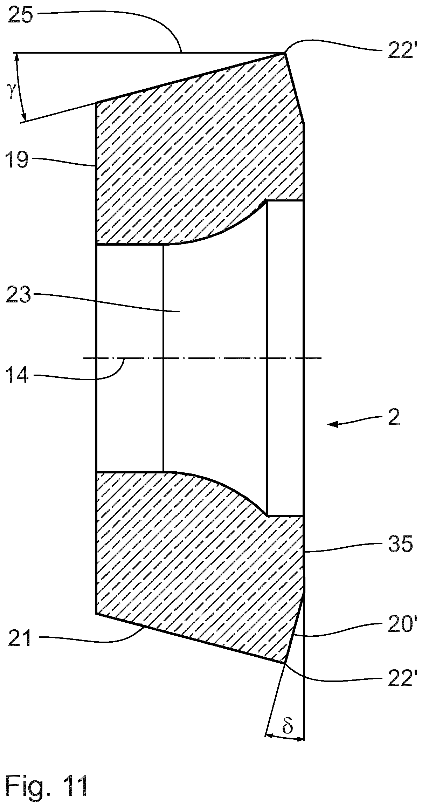

Wie aus Fig. 11 ersichtlich ist, kann die Spanfläche 20' mit der Schneide 22' gegenüber einer senkrecht zur Mittel-Achse 14 verlaufenden senkrechten Linie 35 bzw. Fläche um einen Neigewinkel $\delta$ geneigt sein, für den gilt 0° <= $\delta$ <= 90° und vorzugsweise 0° <= $\delta$ <= 30°. Dies führt zu einer Verstärkung des effektiven negativen Spanwinkels.

**Patentansprüche**

1. Fräswerkzeug

   - mit einem Tragkörper (1), der

      -- scheibenförmig und in einer Drehrichtung (30) drehantreibbar ausgebildet ist,
      -- eine zu einer mittleren Drehachse (Z) koaxiale Öffnung (8) zur Aufnahme einer drehantreibbaren Spindel (32) eines Winkelschleifers (33),
      -- eine Oberseite (7) und eine Unterseite (9) aufweist und

-- als Verbundkörper aus faserverstärktem Kunststoff gebildet ist

- mit einer Anzahl n Schneidelementen (2), die

-- in im radial zur Drehachse (Z) außenliegenden Bereich des Tragkörpers (1) ausgebildeten, zur Unterseite (9) des Tragkörpers (1) offenen Schneidelemente-Kammern (11) angeordnet sind, in denen jeweils ein Schneidelement (2) auswechselbar angeordnet ist und

-- jeweils eine Schneide (22) aufweisen, die

--- über die Unterseite (9) des Tragkörpers (1) vorragt,

**dadurch gekennzeichnet,**
**dass** der Tragkörper (1) zum Einsatz an Winkelschleifern (33) aus einer Anzahl m von mit Epoxydharz beschichteten Glasfasergewebe-Lagen (3) besteht, wobei für die Anzahl m der Lagen gilt: 10 < = m < = 80.

2.  Fräswerkzeug nach Anspruch 1, **dadurch gekennzeichnet,**
    **dass** für die Anzahl m der Glasfasergewebe-Lagen (3) gilt: 30< = m < = 80.

3.  Fräswerkzeug nach Anspruch 2, **dadurch gekennzeichnet,**
    **dass** für die Anzahl m der Glasfasergewebe-Lagen (3) gilt: 30 < = m < = 60.

4.  Fräswerkzeug nach einem der Ansprüche 1 bis 3, **dadurch gekennzeichnet,**
    **dass** die Schneidelemente (2) ringförmig ausgebildet sind und eine Mittel-Achse (14) aufweisen.

5.  Fräswerkzeug nach einem der Ansprüche 1,bis 4 **dadurch gekennzeichnet,**
    **dass** die Schneidelemente (2) jeweils zentriert am Tragkörper (1) befestigt sind.

6.  Fräswerkzeug nach Anspruch 5, **dadurch gekennzeichnet,**
    **dass** die Schneidelemente (2) jeweils mittels einer Befestigungs-Schraube (18), oder einem Bolzen oder einem Stift am Tragkörper (1) befestigt sind.

7.  Fräswerkzeug nach einem der Ansprüche 1 bis 6, **dadurch gekennzeichnet,**
    **dass** zwischen einer Freifläche (21) des Schneidelementes (2) und einer zu dessen Mittel-Achse (14) parallelen Linie (25) ein Freiwinkel $\gamma$ gebildet ist, für den gilt: 0° < = $\gamma$ < = 20° und vorzugsweise 5°< = $\gamma$ < = 15°.

8.  Fräswerkzeug nach einem der Ansprüche 1 bis 7, **dadurch gekennzeichnet,**
    **dass** die Schneidelemente (2) jeweils unter einem negativen Spanwinkel $\beta$ in einer Schneidelemente-Kammer (11) angeordnet sind, wobei für den Spanwinkel $\beta$ gilt: 0° < = $\beta$ < = 40° und vorzugsweise $\beta$ = 30°.

9.  Fräswerkzeug nach einem der Ansprüche 1 bis 8, **dadurch gekennzeichnet,**
    **dass** die Schneidelemente (2) jeweils unter einem Drallwinkel $\alpha$ in einer Schneidelemente-Kammer (11) angeordnet sind, wobei gilt: 10° < = $\alpha$ < = 40° und vorzugsweise $\alpha$ = 30°.

10. Fräswerkzeug nach einem der Ansprüche 1 bis 9, **dadurch gekennzeichnet,**
    **dass** der den Schneidelementen (2) radial zur Drehachse (Z) hin benachbarte ringförmige Bereich der Unterseite (9) als Tiefen-Begrenzungs-Fläche (24) dient, über die die Schneiden (22) maximal um eine Schneidtiefe a vorstehen, wobei gilt: a < = 3,0 mm und vorzugsweise 0,5 mm < = a < = 2,0 mm.

11. Fräswerkzeug nach einem der Ansprüche 1 bis 10, **dadurch gekennzeichnet,**
    **dass** die Schneidelemente (2) aus einem Schneid-Werkstoff bestehen.

12. Fräswerkzeug nach Anspruch 11, **dadurch gekennzeichnet,**
    **dass** der Schneid-Werkstoff aus Hartmetall mit Korngrößen von 0,2 $\mu$m bis 10 $\mu$m, Keramik, Hartmetall mit einer Beschichtung, insbesondere Diamantbeschichtung, polykristallinem Bornitrid (PCBN), polykristallinem Diamant (PKD) oder High Speed Steel (HSS) besteht.

13. Fräswerkzeug nach einem der Ansprüche 1 bis 12, **dadurch gekennzeichnet,**
    **dass** die Schneidelemente (2) mit einer kegelstumpfförmigen, eine Freifläche (21) bildenden Mantelfläche und einer eine Spanfläche (20) bildenden Frontseite ausgebildet sind.

14. Fräswerkzeug nach einem der Ansprüche 1 bis 13, **dadurch gekennzeichnet,**
    **dass** zwischen der Spanfläche (20) des Schneidelementes (2) und einer zu dessen Mittel-Achse (14) senkrechten Linie (35) ein Neigewinkel $\delta$ gebildet ist, für den gilt: 0° < = $\delta$ < = 90° und vorzugsweise 0°< = $\delta$ < = 30°.

15. Verwendung eines Fräswerkzeugs nach einem der Ansprüche 1 bis 14 an freihand geführten Winkelschleifern (33) als Stirnfräser zum Bearbeiten von Werkstücken aus Metall, faserverstärktem Kunststoff und weichen Naturmaterialien, vorzugsweise Holz.

**Claims**

1. Milling tool

    - with a supporting body (1), which

        -- has the shape of a disk and is rotationally drivable in a direction of rotation (30),
        -- has an opening (8) coaxial to a central axis of rotation (Z) for accommodating a rotationally drivable spindle (32) of an angle grinder (33),
        -- has an upper side (7) and an underside (9), and
        -- is formed as a composite body of fibre-reinforced plastic,

    - with a number n of cutting elements (2), which

        -- are arranged in cutting element chambers (11) formed in the outer area of the supporting body (1) radially to the axis of rotation (Z), the cutting element chambers (11) being open towards the underside (9) of the supporting body (1), wherein one cutting element (2) is replaceably arranged in each of the cutting element chambers (11), and
        -- each have a cutting edge (22), which

            --- protrudes beyond the underside (9) of the supporting body (1),

        **characterised**
        **in that** for the use on angle grinders (33), the supporting body (1) consists of a number m of glass fibre fabric plies (3) coated with epoxy resin, wherein the number m of plies is such that $10 <= m <= 80$.

2. Milling tool according to claim 1, **characterised in that** the number m of the glass fibre fabric plies (3) is such that $30 <= m <= 80$.

3. Milling tool according to claim 2, **characterised in that** the number m of the glass fibre fabric plies (3) is such that $30 <= m <= 60$.

4. Milling tool according to any one of claims 1 to 3 **characterised in that** the cutting elements (2) have the shape of a ring and have a centreline (14).

5. Milling tool according to any one of claims 1 to 4, **characterised in that** the cutting elements (2) are each fastened to the supporting body (1) in such a way as to be centred relative thereto.

6. Milling tool according to claim 5, **characterised in that** the cutting elements are each fastened to the supporting body (1) by means of a fastening screw (18) or a bolt or a pin.

7. Milling tool according to any one of claims 1 to 6, **characterised in that** between a relief surface (21) of the cutting element (2) and a line (25) parallel to the centreline (14) thereof, a clearance angle $\gamma$ is formed, which is such that $0° < \gamma <= 20°$, and preferably $5° < \gamma <= 15°$.

8. Milling tool according to any one of claims 1 to 7, **characterised in that** the cutting elements (2) are each arranged in a cutting element chamber (11) at a negative cutting angle $\beta$, wherein the cutting angle $\beta$ is such that $0° < \beta <= 40°$, and preferably $\beta = 30°$.

9. Milling tool according to any one of claims 1 to 8, **characterised in that** the cutting elements (2) are each arranged in a cutting element chamber (11) at a twist angle $\alpha$, which is such that $10° < \alpha <= 40°$, and preferably $\alpha = 30°$.

10. Milling tool according to any one of claims 1 to 9, **characterised in that** the ring-shaped area of the underside (9) adjacent to the cutting elements (2) in a direction radial to the axis of rotation (Z) acts as a depth-limiting surface (24), with the cutting edges (22) protruding beyond this depth limiting surface (24) by no more than a cutting depth of a, with $a <= 3.0$ mm, and preferably $0.5$ mm $<= a <= 2.0$ mm.

11. Milling tool according to any one of claims 1 to 10, **characterised in that** the cutting elements (2) consist of a cutting material.

12. Milling tool according to claim 11, **characterised in that** the cutting material consists of hard metal with grain sizes ranging from $0.2$ $\mu$m to $10$ $\mu$m, ceramic, hard metal with a coating, in particular a diamond coating, polycrystalline boron nitride (PCBN), polycrystalline diamond (PCD) or high speed steel (HSS).

13. Milling tool according to any one of claims 1 to 12, **characterised in that** the cutting elements (2) are formed with a lateral surface in the shape of a truncated cone forming a relief surface (21) and a front side forming a cutting surface (20).

14. Milling tool according to any one of claims 1 to 13, **characterised in that** between the cutting surface (20) of the cutting element (2) and a line (35) perpendicular to the centreline (14) thereof, an angle of inclination $\delta$ is formed, which is such that $0° <= \delta <$

= 90°, and preferably 0° < = δ < = 30°.

15. Use of a milling tool according to any one of claims 1 to 14 on handheld angle grinders (33) used as face cutters in order to machine workpieces of metal, fibre-reinforced plastic and soft natural materials, preferably wood.

**Revendications**

1. Outil de fraisage

   - avec un corps porteur (1) qui

     -- est réalisé en forme de disque et de manière à pouvoir être entraîné en rotation dans un sens de rotation (30),
     -- présente une ouverture (8) coaxiale à un axe de rotation (Z) central pour recevoir une broche (32) pouvant être entraînée en rotation d'une meuleuse d'angle (33),
     -- un côté supérieur (7) et un côté inférieur (9) et
     -- est formé en tant que corps composite en matière plastique renforcée par des fibres

   - avec un nombre de n éléments de coupe (2) qui

     -- sont agencés dans des chambres d'éléments de coupe (11) ouvertes sur le côté inférieur (9) du corps porteur (1), formées dans la région située à l'extérieur radialement à l'axe de rotation (Z) du corps porteur (1), dans lesquelles un élément de coupe (2) est respectivement agencé de manière interchangeable et
     -- présentent respectivement une lame (22) qui

       --- fait saillie par-dessus le côté inférieur (9) du corps porteur (1),

   **caractérisé en ce que**
   le corps porteur (1) est composé, pour être utilisé au niveau de meuleuses d'angle (33), d'un nombre m de couches de tissu de fibre de verre (3) recouvertes de résine époxydique, dans lequel pour le nombre m des couches s'applique :

   $$10 <= m <= 80.$$

2. Outil de fraisage selon la revendication 1, **caractérisé en ce que** pour le nombre m de couches de tissu de fibre de verre (3) s'applique :

   $$30 <= m <= 80.$$

3. Outil de fraisage selon la revendication 2, **caractérisé en ce que** pour le nombre m de couches de tissu de fibre de verre (3) s'applique :

   $$30 <= m <= 60.$$

4. Outil de fraisage selon l'une quelconque des revendications 1 à 3, **caractérisé en ce que** les éléments de coupe (2) sont réalisés en forme annulaire et présentent un axe central (14).

5. Outil de fraisage selon l'une quelconque des revendications 1 à 4, **caractérisé en ce que** les éléments de coupe (2) sont fixés au corps porteur (1) de manière respectivement centrée.

6. Outil de fraisage selon la revendication 5, **caractérisé en ce que** les éléments de coupe (2) sont respectivement fixés contre le corps porteur (1) au moyen d'une vis de fixation (18) ou d'un boulon ou d'une cheville.

7. Outil de fraisage selon l'une quelconque des revendications 1 à 6, **caractérisé en ce que** entre une surface de dépouille (21) de l'élément de coupe (2) et une ligne (25) parallèle à l'axe central (14) de celui-ci est formé un angle de dépouille γ, pour lequel s'applique : 0° <= γ <= 20° et de préférence 5° <= γ <= 15°.

8. Outil de fraisage selon l'une quelconque des revendications 1 à 7, **caractérisé en ce que** les éléments de coupe (2) sont respectivement agencés sous un angle de serrage β négatif dans une chambre d'éléments de coupe (11), dans lequel pour l'angle de serrage β s'applique : 0 ° <= β <= 40° et de préférence β = 30°.

9. Outil de fraisage selon l'une quelconque des revendications 1 à 8, **caractérisé en ce que** les éléments de coupe (2) sont respectivement agencés sous un angle de torsion α dans une chambre d'éléments de coupe (11), dans lequel s'applique : 10° <= α <= 40° et de préférence α = 30°.

10. Outil de fraisage selon l'une quelconque des revendications 1 à 9, **caractérisé en ce que** la région en forme annulaire du côté inférieur (9) voisine des éléments de coupe (2) radialement vers l'axe de rotation (Z) sert de surface de délimitation de profondeur (24) par-dessus laquelle les lames (22) dépassent au maximum d'une profondeur de coupe a, dans lequel s'applique : a <= 3,0 mm et de préférence 0,5 mm <= a <= 2,0 mm.

11. Outil de fraisage selon l'une quelconque des revendications 1 à 10, **caractérisé en ce que** les éléments de coupe (2) comprennent un outil de coupe.

12. Outil de fraisage selon la revendication 11, **caractérisé en ce que** l'outil de coupe est composé d'un métal dur avec une grosseur de grain de 0,2 $\mu$m à 10 $\mu$m, de céramique, d'un métal dur avec un revêtement, en particulier un revêtement en diamant, de nitrure de bore polycristallin (PCBN), de diamant polycristallin (PCD) ou d'acier rapide (AR).

13. Outil de fraisage selon l'une quelconque des revendications 1 à 12, **caractérisé en ce que** les éléments de coupe (2) sont formés d'une surface extérieure tronconique formant une surface de dépouille (21) et d'une face frontale formant une surface de coupe (20).

14. Outil de fraisage selon l'une quelconque des revendications 1 à 13, **caractérisé en ce que** entre la surface de coupe (20) de l'élément de coupe (2) et une ligne (35) verticale à l'axe central (14) de celui-ci est formé un angle d'inclinaison $\delta$, pour lequel s'applique : 0° <= $\delta$ <= 90° et de préférence 0° <= $\delta$ <= 30°.

15. Utilisation d'un outil de fraisage selon l'une quelconque des revendications 1 à 14 sur des meuleuses d'angle (33) guidées en mains libres en tant que fraise à spirale pour travailler des pièces en métal, en matière plastique renforcée par des fibres et en matériaux naturels mous, de préférence du bois.

EP 3 053 719 B1

Fig. 1

EP 3 053 719 B1

Fig. 2

Fig. 3

EP 3 053 719 B1

Fig. 4

Fig. 5

Fig. 6

Fig. 7

25

γ

22

19

23

14

2

20

21

## Fig. 8

Z

8

3

5

4

## Fig. 9

EP 3 053 719 B1

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2015052144 W
- EP 1698417 A1
- US 5605420 A
- EP 0292246 B1
- DE 3854408 T2
- FR 1532867 A
- US 20140010606 A1